# EUROPÄISCHE PATENTSCHRIFT

(11) **EP 2 663 794 B1**
(45) Veröffentlichungstag und Bekanntmachung des Hinweises auf die Patenterteilung: **14.05.2014**
(21) Anmeldenummer: 12712949.2
(22) Anmeldetag: 28.03.2012
(51) Int. Cl.: F16K 7/04, F16K 7/06

(54) **QUETSCHVENTIL**
PINCH VALVE
VANNE À MANCHON

(30) Priorität: 29.03.2011 DE 102011015385
(43) Veröffentlichungstag der Anmeldung: 20.11.2013
(73) Patentinhaber: Festo AG & Co. KG, 73734 Esslingen (DE)
(72) Erfinder: BERWANGER, Johannes, 73733 Esslingen (DE); HERRIG, Martin, 73265 Dettingen (DE)
(74) Vertreter: Abel, Martin
(86) Internationale Anmeldenummer: PCT/EP2012/001344
(87) Internationale Veröffentlichungsnummer: WO 2012/130435

(56) Entgegenhaltungen:
- EP-A1- 1 148 281
- US-A- 1 865 012
- US-A- 3 550 861
- US-A- 3 685 786
- US-A- 3 920 215

## Beschreibung

Die Erfindung betrifft ein Quetschventil, mit einem eine Längsachse aufweisenden schlauchförmigen ventilglied und einem im Bereich des Außenumfanges des Ventilgliedes angeordneten und unter Ausführung einer Betätigungsbewegung relativ zu dem Ventilglied in dessen Umfangsrichtung verdrehbaren Betätigungsglied, und ferner mit mindestens einem zwischen dem Ventilglied und dem Betätigungsglied angeordneten, zum Zwecke eines mehr oder weniger starken Zusammenquetschens des Ventilgliedes quer zu dessen Längsachse unter Ausführung einer Arbeitsbewegung wahlweise nach innen in Richtung zum Ventilglied oder entgegengesetzt dazu nach außen bewegbaren Stempel, wobei das Betätigungsglied an seiner dem Ventilglied zugewandten Innenseite mindestens eine zur nach innen gerichteten drückenden Beaufschlagung des mindestens einen Stempels dienende und bei Ausführung der Betätigungsbewegung an dem mindestens einen Stempel abgleitende Betätigungsfläche aufweist, die einen sich mit bezüglich des Ventilgliedes veränderndem Abstand zumindest ein Stückweit in der Umfangsrichtung des Ventilgliedes erstreckenden Längsverlauf hat, der zumindest partiell eine der Umfangsrichtung des Ventilgliedes überlagerte, in Achsrichtung der Längsachse des Ventilgliedes orientierte Axialkomponente aufweist, wobei die Betätigungsbewegung des Betätigungsgliedes eine durch Führungsmittel vorgegebene Kombination einer Drehbewegung und einer diesbezüglich zumindest phasenweise überlagerten axialen Verschiebebewegung ist.

Ein aus der US 3,920,215 bekanntes Quetschventil enthält ein längliches, schlauchförmiges Ventilglied, das von einem gehäuseartigen Hüllkörper umgeben ist und sich zwischen zwei Fluidanschlüssen erstreckt. Koaxial auf dem Hüllkörper sitzt ein axial unbeweglich fixiertes, jedoch relativ zu dem Ventilglied in dessen Umfangsrichtung verdrehbares Betätigungsglied. Der Hüllkörper ist radial geschlitzt und von zwei radial verschiebbaren Stempeln durchsetzt, die einerseits am Außenumfang des Ventilgliedes und andererseits an einer an der Innenseite des Betätigungsgliedes ausgebildeten Betätigungsfläche anliegen. Die Betätigungsfläche hat einen in der Umfangsrichtung des Ventilgliedes orientierten Längsverlauf, wobei sich ihr radialer Abstand zum Ventilglied über ihre Länge hinweg ändert. Mit anderen Worten entspricht der Verlauf der Betätigungsfläche demjenigen eines Längenabschnittes einer rechtwinkelig zur Längsachse des Ventilgliedes angeordneten Spirale. Wenn das Betätigungsglied relativ zu dem Hüllkörper und somit auch relativ zu dem Ventilglied verdreht wird, gleitet die spiralige Betätigungsfläche an der Rückseite des zugeordneten Stempels ab und drückt diesen mehr oder weniger weit nach radial innen.

Ein Nachteil des bekannten Quetschventils besteht darin, dass zwischen der als Betätigungsbewegung fungierenden Drehbewegung des Betätigungsgliedes und der daraus abgeleiteten Arbeitsbewegung jedes Betätigungsgliedes eine relativ große Übersetzung vorliegt. Dementsprechend ergibt sich eine hohe Betätigungskraft. Außerdem können Zwischenstellungen der Stempel nur durch Verrastungsmaßnahmen gewährleistet werden, die insofern Anlass zu Beeinträchtigungen geben, als sie eine gewisse Schwergängigkeit der Betätigungsbewegung zur Folge haben, keine stufenlose Einstellung des gewünschten Strömungsquerschnittes ermöglichen und letztlich relativ verschleißanfällig sind.

Aus der DE 69232487 T2 geht ein nach Art eines Quetschventils arbeitender Ventilverschluss hervor, bei dem ein Schlauch mittels eines radial beweglichen Kompressionselementes, zum Beispiel eine Kugel, dadurch absperrbar ist, dass das Kompressionselement von einem Nocken beaufschlagt wird, der an der Innenfläche eines rohrförmigen Gehäuseteils ausgebildet ist, das auf ein den Schlauch aufnehmendes Gehäuseteil aufschraubbar ist.

Aus der US 2,987,292 ist ein Quetschventil bekannt, bei dem ein Schlauch durch radial bewegliche Kugeln zusammendrückbar ist, die mittels einer drehbaren Scheibe betätigbar sind. Die Scheibe hat an ihrem Innenumfang gekrümmte Betätigungsflächen zur Beaufschlagung der Kugeln.

Aus der US-A-3 550 861 ist ein Quetschventil der eingangs genannten Art bekannt, das über ein hülsenförmiges Betätigungsglied verfügt, das mit einem Gehäuse in Gewindeeingriff steht, in dem ein schlauchförmiges Ventilglied angeordnet ist. Wird das Betätigungsglied verdreht, führt es aufgrund des Gewindeeingriffes eine überlagerte Axialbewegung aus, wobei es mit einer konischen Betätigungsfläche auf mehrere Kugeln einwirkt und diese radial nach innen verlagert, wobei das Ventilglied zusammengequetscht wird.

Der Erfindung liegt die Aufgabe zugrunde, ein Quetschventil zu schaffen, das eine leichtgängige und fein dosierbare Betätigungsbewegung des Betätigungsgliedes ermöglicht.

Zur Lösung dieser Aufgabe ist in Verbindung mit den eingangs genannten Merkmalen vorgesehen, dass an der Innenseite des Betätigungsgliedes mehrere nach Art eines mehrgängigen Gewindes ausgebildete nichtlineare Nuten angeordnet sind, in die jeweils einer von mehreren entlang des Außenumfanges des Ventilgliedes verteilt angeordneten Stempeln eingreift und die jeweils eine Betätigungsfläche und zugleich ein Führungsmittel bilden.

Durch den erfindungsgemäßen Längsverlauf der mehreren Betätigungsflächen und durch den damit verbundenen Umstand, dass die Betätigungsbewegung aufgrund der vorhandenen Führungsmittel aus einer dem Längsverlauf der Betätigungsfläche entsprechenden Kombination einer Drehbewegung und einer diesbezüglich zumindest phasenweise überlagerten axialen Verschiebebewegung besteht, lässt sich eine bei Bedarf sehr leichtgängige und fein dosierbare Betätigungsbewegung realisieren. Die radiale Abstandsvariation zwischen der Betätigungsfläche und dem Ventilglied kann relativ stark gespreizt werden und auf eine relativ große Drehbewegung beziehungsweise einen relativ großen Drehwinkel des Betätigungsgliedes verteilt werden, was eine geringe Übersetzung zur Folge hat, so dass die zur Betätigung des Betätigungsgliedes erforderlichen Stellkräfte auf einem geringen Niveau gehalten werden können. Es besteht auf diese Weise insbesondere auch die Möglichkeit, den Steigungswinkel der Betätigungsfläche über ihren Längsverlauf hinweg auf ein derart moderates Maß zu beschränken, dass auch ohne Formschlussmaßnahmen allein aufgrund von Reibschluss eine Selbsthemmung vorliegt, die zur Folge hat, dass das Betätigungsglied jede Einstellposition unabhängig von dem im Ventilglied herrschenden Fluiddruck ohne zusätzliche Hilfskräfte beziehungsweise Arretierung stabil beibehält.

Das Quetschventil weist mehrere in der Umfangsrichtung um das Ventilglied herum verteilt angeordnete individuelle Stempel auf. Auf diese Weise kann der Hub der einzelnen Stempel verringert werden, der erforderlich ist, um den Strömungsquerschnitt wahlweise komplett freizugeben oder komplett zu verschließen. An der Innenseite des Betätigungsgliedes befinden sich mehrere nach Art eines mehrgängigen Gewindes ausgebildete nichtlineare Nuten, in die jeweils einer von mehreren entlang des Außenumfanges des Ventilgliedes verteilt angeordneten und bezüglich der Längsrichtung des Ventilgliedes bevorzugt auf gleicher axialer Höhe liegenden Stempeln eingreift, wobei jede Nut sowohl als Betätigungsfläche als auch als Führungsmittel fungiert.

Durch die erfindungsgemäße Maßnahme lässt sich auch eine derartige Konizität der Betätigungsflächen erreichen, dass eine Linearisierung der Durchflusskennlinie des durch das Quetschventil gesteuerten Strömungsmediums erfolgt. Dementsprechend ist ein besonders genaues und reproduzierbares Dosieren des Durchflusses möglich.

Vorteilhafte Weiterbildungen der Erfindung gehen aus den Unteransprüchen hervor.

Zweckmäßigerweise ist die mit einem jeweiligen Stempel kooperierende Betätigungsfläche von der Begrenzungsfläche einer an der Innenseite des Betätigungsgliedes angeordneten, zumindest partiell nichtlinearen Nut gebildet, in die der zugeordnete Stempel mit einem zum Hervorrufen der Arbeitsbewegung zu beaufschlagende Betätigungsabschnitt hineinragt. Der in die Nut hineinragende Betätigungsabschnitt ist insbesondere ein dem Ventilglied entgegengesetzt orientierter Endabschnitt des Stempels. Bei der Begrenzungsfläche handelt es sich vorzugsweise um eine seitlich beidseits von Nutflanken benachbarte Grundfläche der Nut, die in bezüglich der Längsachse des Ventilgliedes radialer Richtung von axial außen her auf den betreffenden Stempel einwirken kann.

Der in die Nut eingreifende Betätigungsabschnitt des Stempels verfügt zweckmäßigerweise über eine sich verjüngende Gestaltung, so dass selbst dann, wenn die Betätigungsfläche in der Längsrichtung des Ventilgliedes eine große Spreizung aufweist, keine Verklemmungsgefahr zwischen dem Stempel und den Nutflanken auftritt. Die Nut hat zur Realisierung des sich in ihrer Längsrichtung bezüglich des Ventilgliedes verändernden Abstandes zweckmäßigerweise eine sich in ihrer Nutlängsrichtung verändernde Tiefe, und zwar zumindest über einen Teil der Nutlänge hinweg und vorzugsweise über die gesamte Nutlänge hinweg.

Die Führungsmittel können unabhängig von dem mindestens einen Stempel ausgebildet sein. Als besonders vorteilhaft wird jedoch eine Bauform angesehen, bei der der mindestens eine Stempel zu den Führungsmitteln gehört und unmittelbar selbst als Führungsmittel dazu beiträgt, dass die Betätigungsbewegung des Betätigungsgliedes eine dem Längsverlauf der Betätigungsfläche folgende überlagerte Dreh- und Verschiebebewegung des Betätigungsgliedes ist. In diesem Zusammenhang ist es vorteilhaft, wenn der mindestens eine Stempel und die Begrenzungsfläche der zugeordneten Nut gemeinsam die Führungsmittel bilden, wobei der Stempel in die Nut eintaucht und von den Nutflanken beaufschlagt wird, so dass das Betätigungsglied durch das Zusammenwirken der ineinander eingreifenden Nuten und Stempel zu seiner besonderen Betätigungsbewegung veranlasst wird, wenn es von außen her mit entsprechenden Betätigungs- bzw. Verstellkräften beaufschlagt wird. Die Betätigungsbewegung ist insbesondere dadurch hervorrufbar, dass in das Betätigungsglied ein Drehmoment eingeleitet wird.

Wie schon angedeutet, ist es von Vorteil, wenn mindestens eine Betätigungsfläche zumindest partiell einen schraubenwendelförmigen Längsverlauf hat.

Besonders zweckmäßig wird eine Zweifachanordnung von Stempeln angesehen, bei der zwei Stempel auf einander diametral entgegengesetzten Seiten des Außenumfanges des Ventilgliedes angeordnet sind. Zum Schließen des Ventilgliedes werden hier bei Ausführung der Betätigungsbewegung beide Stempel gleichzeitig von einander entgegengesetzten Seiten her in radialer Richtung nach innen gegen die Außenfläche der Wandung des Ventilgliedes gedrückt.

Alle Betätigungsflächen ein und desselben Betätigungsgliedes sind zweckmäßigerweise in der Umfangsrichtung des Ventilgliedes versetzt zueinander an dem Betätigungsglied angeordnet, wobei dieser Umfangsversatz insbesondere 180° beträgt. Untereinander weisen die mehreren Betätigungsflächen zweckmäßigerweise einen identischen Längsverlauf auf. Außerdem liegen sie in der Längsrichtung des Ventilgliedes vorzugsweise auf gleicher Höhe.

Das Betätigungsglied ist zweckmäßigerweise hülsenförmig ausgebildet und so angeordnet, dass es das Ventilglied koaxial umschließt. Es kann länger oder kürzer als das Ventilglied ausgebildet sein.

Zweckmäßigerweise verfügt das Quetschventil über einen das Ventilglied konzentrisch umschließenden starren Hüllkörper, an dessen Außenumfang das bevorzugt hülsenförmige Betätigungsglied verdrehbar und axial verschiebbar angeordnet ist. Der Hüllkörper kann unmittelbar auch ein Gehäuse des Quetschventils bilden. Weiterhin verfügt der Hüllkörper über eine zweckmäßigerweise der Anzahl der vorhandenen Stempel entsprechende Anzahl radialer Durchbrüche, die jeweils von mindestens einem Stempel zur Ausführung seiner Arbeitsbewegung radial verschiebbar durchsetzt werden.

Der Hüllkörper kann einteilig oder mehrteilig ausgebildet sein. Vorzugsweise besteht er aus zwei schalenförmigen Stützelementen, die von einander diametral entgegengesetzten Seiten her außen an das Ventilglied angesetzt sind, und ferner aus einem die schalenförmigen Stützelemente außen koaxial umschließenden Außenrohr. Jeder Durchbruch durchsetzt dabei sowohl mindestens ein Stützelement als auch das Außenrohr.

Das Außenrohr ist zweckmäßigerweise formschlüssig mittels Rollieren oder mittels eines sonstigen Umformverfahrens mit stirnseitigen Abschlusselementen verbunden, die jeweils einen mit dem das Ventilglied durchsetzenden Ventilkanal kommunizierenden Fluidanschluss definieren.

Der Hüllkörper ist außen bevorzugt glattflächig ausgebildet, so dass sich eine zuverlässige und leichtgängige Führung für das kombiniert zu verdrehende und axial zu verschiebende Betätigungsglied einstellt.

An der Außenfläche des Hüllkörpers kann eine sich in der Längsrichtung des Ventilgliedes erstreckende Anzeigeskala angeordnet sein, die von dem Betätigungsglied in Abhängigkeit von dessen Einstellposition unterschiedlich weit axial abgedeckt wird. Auf diese Weise lässt sich der aktuell eingestellte Wert des freigegebenen Strömungsquerschnittes bequem ablesen.

Das Betätigungsglied kann insbesondere zur manuellen oder zur maschinellen Einleitung einer die Betätigungsbewegung hervorrufenden Betätigungskraft ausgebildet sein. Ebenso ist eine Ausbildung möglich, die das wahlweise Einleiten manueller oder maschineller Betätigungskräfte gestattet. Bei maschineller Einleitung der Betätigungskraft enthält des Quetschventil zweckmäßigerweise einen elektrischen Antriebsmotor, der mit dem Betätigungsglied antriebsmäßig gekoppelt ist. Die Kopplung kann beispielsweise mittels eines Zahnradgetriebes erfolgen. Hierbei kann das Betätigungsglied an seinem Außenumfang unmittelbar eine Verzahnung nach Art eines Zahnrades aufweisen, das mit einem Antriebszahnrad kämmt, welches durch einen Antriebsmotor antreibbar ist. Bei maschinellem beziehungsweise motorischem Antrieb des Betätigungsgliedes lässt sich der Grad des freigegebenen Strömungsquerschnittes des Ventilgliedes insbesondere mittels eines Wegmesssystems erfassen. Man kann den aktuellen Betriebszustand des Quetschventils beispielsweise anhand der Drehbewegung eines Antriebsmotors erfassen und es bedarf somit keiner Positionserfassung des Betätigungsgliedes selbst.

Das erfindungsgemäße Quetschventil eröffnet unter anderem auch die Möglichkeit, das Betätigungsglied stufenlos zu verstellen und in die jeweils gewünschte Einstellposition zu verbringen. Obgleich die Betätigungsbewegung des Betätigungsgliedes sich aus einer Drehbewegung und einer diesbezüglich überlagerten axialen Verschiebebewegung zusammensetzt, kann die Betätigungskraft vorzugsweise ausschließlich als Drehmoment in das Betätigungsglied eingeleitet werden. Die axiale Bewegungskomponente der Betätigungsbewegung ergibt sich hierbei durch die dem Längsverlauf der mindestens einen Betätigungsfläche Rechnung tragenden Führungsmittel.

Nachfolgend wird die Erfindung anhand der beiliegenden Zeichnung näher erläutert. In dieser zeigen:
- Figur 1: eine perspektivische Außenansicht einer bevorzugten Ausführungsform des erfindungsgemäßen Quetschventils bei Einnahme der maximalen Offenstellung,
- Figur 2: eine Seitenansicht des Quetschventils aus Figur 1,
- Figur 3: eine Vorderansicht des Quetschventils mit Blickrichtung gemäß Pfeil III aus Figur 2,
- Figur 4: einen Längsschnitt durch das in der maximalen Offenstellung befindliche Quetschventil gemäß Schnittlinie IV-IV aus Figur 2,
- Figur 5: einen Querschnitt durch das in maximaler Offenstellung befindliche Quetschventil gemäß Schnittlinie V-V aus Figuren 2 und 4,
- Figur 6: einen außermittigen Längsschnitt durch das in maximaler Offenstellung befindliche Quetschventil gemäß Schnittlinie VI-VI aus Figur 4,
- Figur 7: eine perspektivische Außenansicht des Quetschventils bei Einnahme einer das Ventilglied komplett verschließenden Schließstellung,
- Figur 8: das Quetschventil in der Schließstellung aus Figur 7 in einer Seitenansicht,
- Figur 9: das in Schließstellung befindliche Quetschventil im Längsschnitt gemäß Schnittlinie IX-IX aus Figur 8,
- Figur 10: das in Schließstellung befindliche Quetschventil gemäß Schnittlinie X-X aus Figuren 8 und 9,
- Figur 11: das Quetschventil im abgenommenen Zustand des Betätigungsgliedes,
- Figur 12: eine weitere Ausführungsform des Quetschventils, das über Mittel zur maschinellen und insbesondere zur motorischen Betätigung verfügt, und
- Figur 13: einen Querschnitt durch die Anordnung aus Figur 12 gemäß Schnittlinie XIII-XIII.

Das in seiner Gesamtheit mit Bezugsziffer 1 bezeichnete Quetschventil ist ausgebildet, um den einem Strömungsmedium beim Hindurchströmen durch einen Ventilkanal 2 zur Verfügung stehenden Strömungsquerschnitt variabel vorgeben zu können.

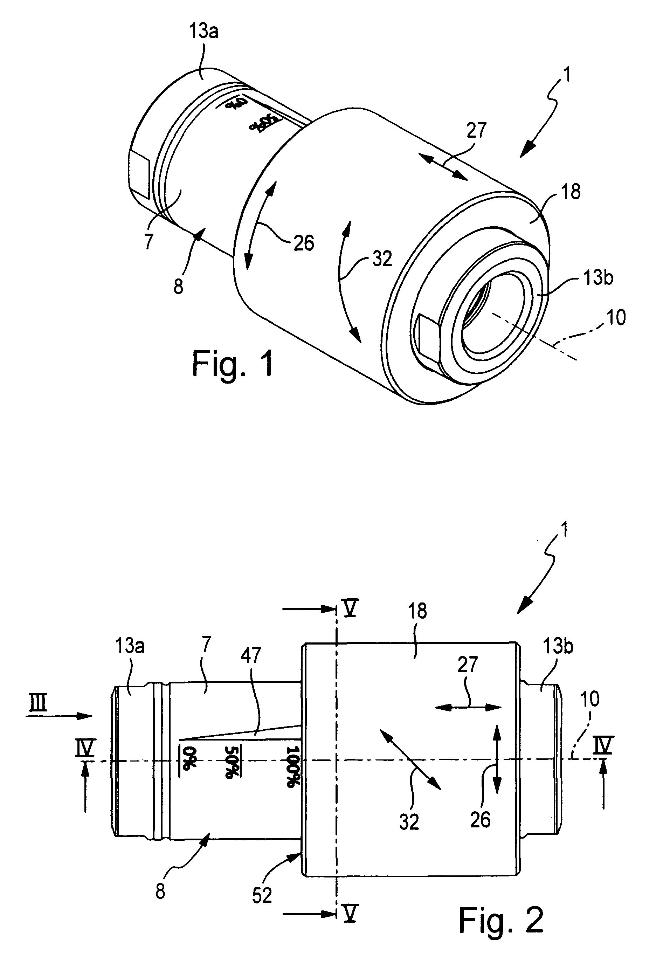

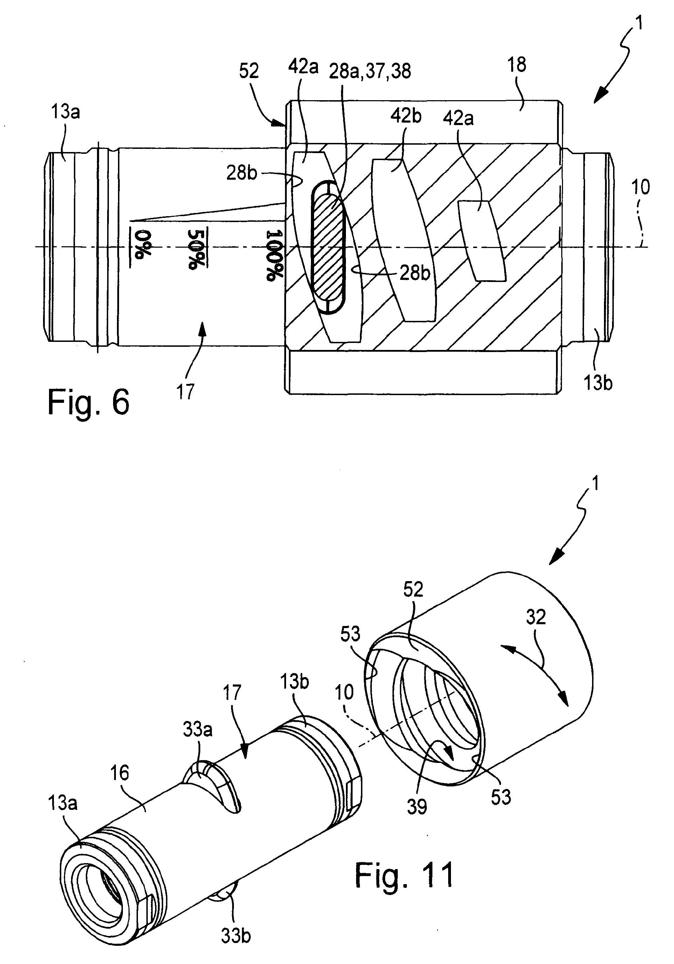

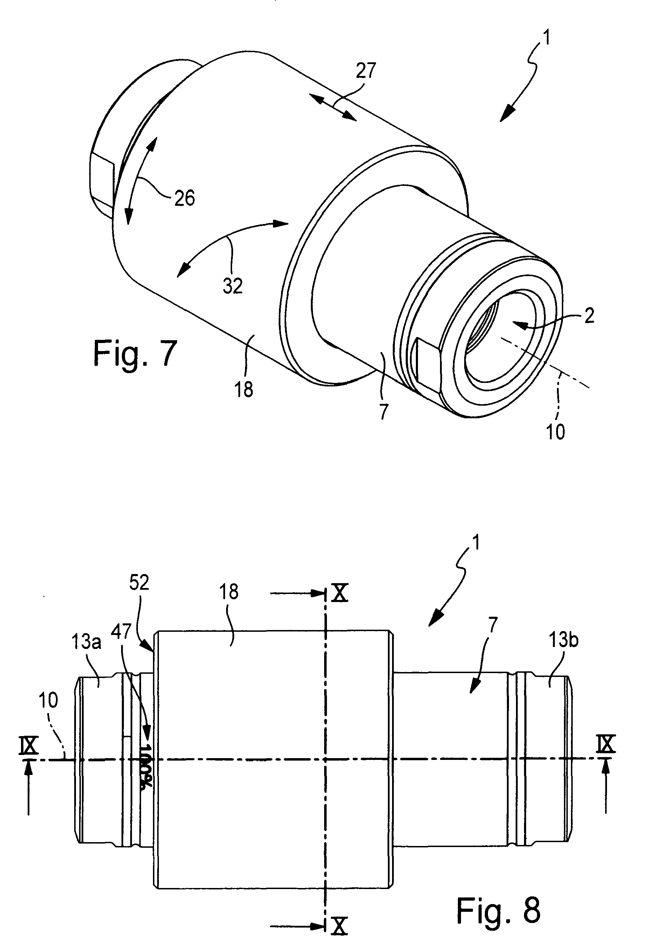

Das Quetschventil 1 des Ausführungsbeispiels ermöglicht in dieser Hinsicht eine die Strömung vollständig verhindernde Schließstellung (Figuren 7 bis 10), eine einen maximalen Strömungsquerschnitt zur Verfügung stellende Offenstellung (Figuren 1 bis 6) und - insbesondere stufenlos - beliebige Zwischenstellungen zwischen der Offenstellung und der Schließstellung, in denen der Strömungsquerschnitt zwischen null und dem maximal möglichen Strömungsquerschnitt liegt.

Bei dem zu steuernden Strömungsmedium handelt es sich in der Regel um ein Gas oder um eine Flüssigkeit. Allerdings lässt sich auch die Strömungsrate anderer fließfähiger Medien mit Hilfe des Quetschventils 1 beeinflussen, wobei hier insbesondere an pulver- oder granulatförmige Stoffe gedacht ist.

Das Quetschventil 1 verfügt über ein eine Längsachse 10 aufweisendes und vorzugsweise über eine lineare Erstreckung verfügendes schlauchförmiges Ventilglied 3. Dieses Ventilglied 3 hat zwei einander axial entgegengesetzte Endabschnitte 4a, 4b und ist von einem von ihm umgrenzten Ventilgliedkanal 5 durchsetzt, der stirnseitig an den beiden Endabschnitten 4a, 4b ausmündet.

Die Wandung des Ventilgliedes 3 ist in bezüglich der Längsachse 10 radialer Richtung flexibel und insbesondere elastisch verformbar. Diese Verformbarkeit bezieht sich insbesondere auf einen zu den beiden Endabschnitten 4a, 4b beabstandeten Steuerbereich 6, der insbesondere axial mittig zwischen den beiden Endabschnitten 4a, 4b liegt. Vorzugsweise verfügt das Ventilglied 3 jedoch in seiner Gesamtheit über gummielastische Eigenschaften.

Im von radial außen her nicht beaufschlagten neutralen Zustand weist das Ventilglied eine Gestalt auf, in der der Ventilgliedkanal 5 durchgängig offen ist und den maximal möglichen Strömungsquerschnitt freigibt.

Das schlauchförmige Ventilglied 3 ist koaxial zweckmäßigerweise von einem starren Hüllkörper 7 umschlossen. Exemplarisch ist dieser Hüllkörper 7 Bestandteil eines das Ventilglied 3 umschließenden Gehäuses 8 des Quetschventils 1. Der Hüllkörper 7 liegt im unverformten, neutralen Zustand des Ventilgliedes 3 an dessen radial nach außen orientierten peripheren Außenumfang 12 an und verhindert ein Aufblähen des Ventilgliedes 3, wenn in dem Ventilgliedkanal 5 ein atmosphärischer Überdruck ansteht.

An jeden der beiden bevorzugt flanschförmig ausgebildeten Endabschnitte 4a, 4b schließt sich zweckmäßigerweise eines von zwei Abschlusselementen 13a, 13b an, die zweckmäßigerweise ebenfalls zu dem Gehäuse 8 gehören und die jeweils einen Fluidanschluss 14a, 14b definieren. Der Fluidanschluss 14a, 14b ist charakterisiert durch einen das betreffende Anschlusselement 13a, 13b durchsetzenden Fluidkanal mit zugeordneten Anschlussmitteln 15, die es ermöglichen, eine weiterführende Fluidleitung insbesondere lösbar anzuschließen. Exemplarisch sind die Anschlussmittel 15 von einem Gewinde gebildet, es kann sich aber beispielsweise auch um Steckanschlussmittel handeln.

Das Ventilglied 3 liegt mit seinen ringförmig konturierten Endabschnitten 4a, 4b unter Abdichtung axial am sich jeweils anschließenden Abschlusselement 13a, 13b an. Auf diese Weise ergibt sich ein fluiddichter Übergang zwischen dem Ventilgliedkanal 5 und jedem Fluidanschluss 14a, 14b, wobei der Ventilgliedkanal 5 gemeinsam mit den beiden Fluidanschlüssen 14a, 14b den Ventilkanal 2 des Quetschventils 1 definiert. Vorzugsweise enthält der Hüllkörper 7 ein sich zwischen den beiden Anschlusselementen 13a, 13b erstreckendes Außenrohr 16. Es besitzt zweckmäßigerweise eine kreiszylindrische Außenumfangsfläche 17. Die Außenumfangsfläche 17 ist insbesondere glattflächig ausgebildet, so dass sie in vorteilhafter Weise als Gleit- beziehungsweise Führungsfläche für ein noch näher zu erläuterndes Betätigungsglied 18 fungieren kann.

Das Außenrohr 16 ist mit seinen beiden einander entgegengesetzten axialen Endabschnitten 22a, 22b am jeweils zugeordneten Abschlusselement 13a, 13b befestigt. Die Befestigung ist zweckmäßigerweise schraubenlos und ohne zusätzliche Befestigungselemente allein durch plastisches Umformen der genannten Endabschnitte 22a, 22b realisiert. Jedes Abschlusselement 13a, 13b taucht ein Stückweit koaxial in das Außenrohr 16 ein und weist im Bereich seines Außenumfanges zweckmäßigerweise eine konzentrische, nach radial außen hin offene Ringnut 23 auf, in die der zugeordnete Endabschnitt 22, 22b des Außenrohres 16 von radial außen her kraft- und formschlüssig hineingedrückt ist, beispielsweise durch Rollieren.

Auf diese Weise bildet das Außenrohr 16 mit den beiden Anschlusselementen 13a, 13b eine starre Einheit.

Der Hüllkörper 7 ist zweckmäßigerweise mehrteilig ausgebildet. Exemplarisch verfügt er zusätzlich zu dem Außenrohr 16 über einen koaxial zwischen dem Außenrohr 16 und dem Ventilglied 3 angeordneten Stützkörper 24, der hülsenförmig ausgebildet ist und der an seinem Innenumfang eine das Ventilglied 3 umschließende Stützfläche 25 aufweist, deren Kontur der Außenkontur des Ventilgliedes 3 entspricht, wenn selbiges sich in der maximalen Offenstellung befindet. Durch die Stützfläche 25 wird ein radiales Aufblähen des gummielastischen Ventilgliedes 3 verhindert.

Der Stützkörper 24 setzt sich zweckmäßigerweise aus zwei individuellen, jeweils schalenförmigen Stützelementen 24a, 24b zusammen, die von einander diametral entgegengesetzten Seiten her radial außen an das Ventilglied 3 angesetzt sind und die sich zu dem hülsenförmigen Stützkörper 24 ergänzen. Durch das aufgesteckte Außenrohr 16 werden die Stützelemente24a, 24b zusammengehalten. Die Mehrteiligkeit des Stützkörpers 24 vereinfacht seine Montage.

Abweichend vom Ausführungsbeispiel kann der Hüllkörper 7 allerdings auch einteilig ausgebildet sein.

Auf der Außenumfangsfläche 17 des Hüllkörpers 7 ist das schon erwähnte Betätigungsglied 18 gleitverschieblich geführt. Zweckmäßigerweise ist das Betätigungsglied 18 hülsenförmig ausgebildet und koaxial zu dem Ventilglied 3 angeordnet. Seine axiale Länge ist geringer als diejenige des Außenrohres 16.

Das Betätigungsglied 18 ist in der Lage, eine durch einen Doppelpfeil angedeutete Drehbewegung 26 relativ zum Ventilglied 3 in dessen Umfangsrichtung auszuführen. Die Umfangsrichtung des Ventilgliedes 3 ist die Richtung um die Längsachse 10 herum. Die Längsachse 10 bildet die gedachte Drehachse für die Drehbewegung 26 des Betätigungsgliedes 18, wobei die bezüglich des Ventilgliedes 3 eingenommene Radiallage des Betätigungsgliedes 18 durch Zusammenwirken mit der vom Betätigungsglied 18 umschlossenen Außenumfangsfläche 17 des Hüllkörpers 7 bewirkt wird.

Das Betätigungsglied 18 ist ferner in der Lage, eine durch einen Doppelpfeil bei 27 angedeutete axiale Verschiebebewegung auszuführen, das heißt eine translatorische Bewegung in der Achsrichtung der Längsachse 10. Sofern im Einzelfall keine anderen Angaben gemacht werden, bezieht sich der Ausdruck "axial" auf die Achsrichtung der Längsachse 10.

Es besteht allerdings für das Betätigungsglied 18 keine freie Beweglichkeit zur Ausführung der Drehbewegung 26 und der axialen Verschiebebewegung 27. Vielmehr sind miteinander kooperierende erste und zweite Führungsmittel 28a, 28b vorhanden, die dafür sorgen, dass das Betätigungsglied 18 lediglich eine durch einen Doppelpfeil angedeutete Betätigungsbewegung 32 ausführen kann, die eine fest vorgegebene Kombination aus der Drehbewegung 26 und der Verschiebebewegung 27 ist, wobei sich die Drehbewegung 26 und die Verschiebebewegung 27 bei Ausführung der Betätigungsbewegung 32 zumindest phasenweise überlagern.

Zur Steuerung des Durchflusses eines Strömungsmediums durch den Ventilgliedkanal 5 weist das Quetschventil 1 zweckmäßigerweise zwei Stempel 33a, 33b auf, die zur besseren Unterscheidung auch als erster und zweiter Stempel 33a, 33b bezeichnet werden und die jeweils in dem radialen Zwischenraum zwischen dem Ventilglied 3 und dem Betätigungsglied 18 angeordnet sind. Obgleich prinzipiell auch eine andere Anzahl von Stempeln 33a, 33b vorhanden sein könnte - das Quetschventil 1 könnte über nur einen solchen Stempel oder über mehr als zwei Stempel verfügen -, hat sich die Zweifachanordnung von Stempeln 33a, 33b als besonders zweckmäßig erwiesen.

Jeder Stempel 33a, 33b durchsetzt in radialer Richtung einen gestalterisch entsprechend angepassten radialen Durchbruch 34a, 34b des Hüllkörpers 7. Dabei ist jeder Stempel 33a, 33b relativ zu dem Hüllkörper 7 in zu der Längsachse 10 rechtwinkeliger und insbesondere radialer Richtung verschiebbar. Die somit mögliche Verschiebebewegung der Stempel 33a, 33b sei im Folgenden als Arbeitsbewegung 35 bezeichnet. Es handelt sich hier insbesondere um eine Linearbewegung.

Im Rahmen der Arbeitsbewegung 35 kann jeder Stempel 33a, 33b wahlweise nach radial innen in Richtung zum Ventilglied 3 oder in hierzu entgegengesetzter Richtung nach radial außen hin bewegt werden.

Die Arbeitsbewegungen 35 sind durch das Betätigungsglied 18 hervorrufbar, wenn selbiges eine Betätigungsbewegung 32 ausführt. Mit anderen Worten fungiert das Betätigungsglied 18 als Antriebselement für die Stempel 33a, 33b. Das Betätigungsglied 18 kooperiert insbesondere derart mit den beiden Stempeln 33a, 33b, dass diese beiden Stempel 33a, 33b ihre Arbeitsbewegungen 35 synchron ausführen, und zwar jeweils entweder gleichzeitig nach radial innen hin oder gleichzeitig nach radial außen hin.

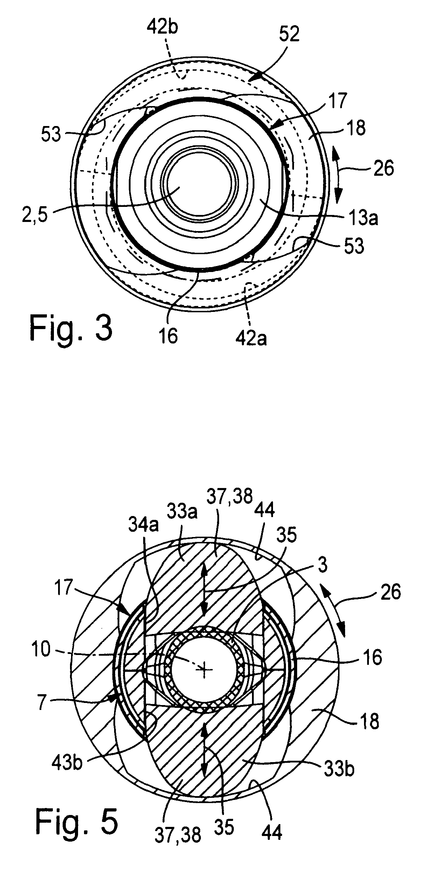

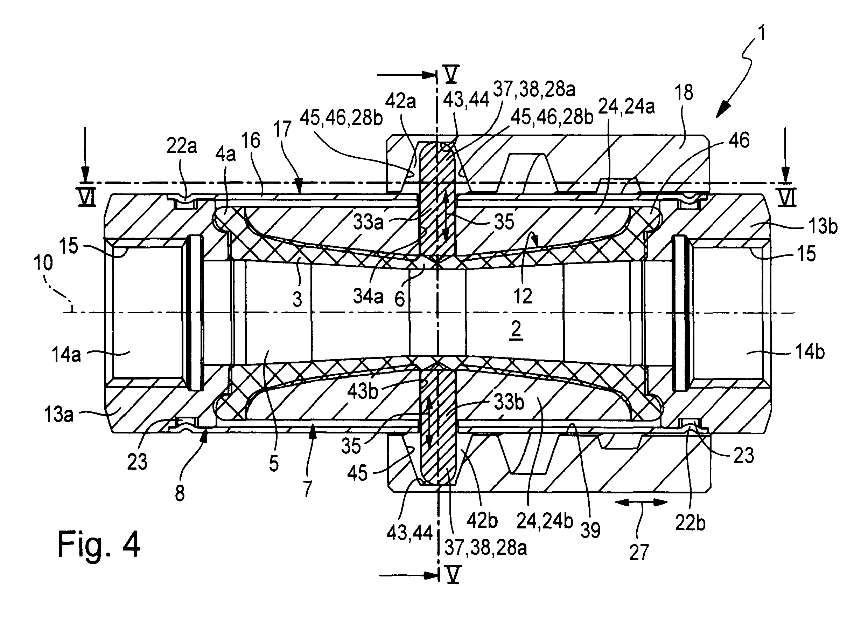

Jeder Stempel 33a, 33b kann eine maximal nach radial außen verlagerte äußere Endstellung einnehmen, die in Figuren 4 und 5 illustriert ist. Hier liegen die Stempel 33a, 33b ohne oder mit nur geringer Vorspannung in dem Steuerbereich 6 am Außenumfang 12 des Ventilgliedes 3 an. Letzteres befindet sich somit in der maximalen Offenstellung.

Die beiden Stempel 33a, 33b können darüber hinaus eine maximal nach innen verlagerte innere Endstellung einnehmen, in der sie das Ventilglied 3 unter elastischer Verformung derart zwischen sich eingespannt haben, dass die Schließstellung des Ventilgliedes 3 vorliegt, in der der Durchgang durch den Ventilgliedkanal 5 unterbrochen ist.

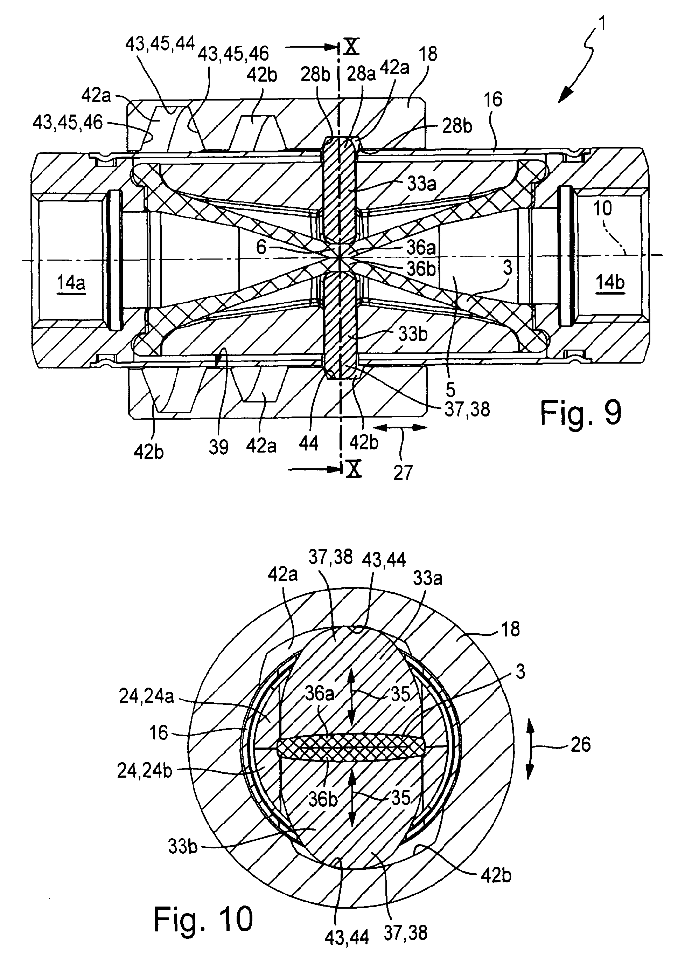

Die unter anderem aus Figuren 9 und 10 ersichtliche Schließstellung des Ventilgliedes 3 äußert sich exemplarisch darin, dass durch die Stempel 33a, 33b sich insbesondere diametral gegenüberliegende Wandabschnitte 36a, 36b der den Ventilgliedkanal 5 umschließenden Wandung des Ventilgliedes 3 bis zum gegenseitigen Kontakt zusammengedrückt sind. Besagte Wandabschnitte 36a, 36b liegen dabei dichtend aneinander an.

Die beiden Stempel 33a, 33b sind zweckmäßigerweise im Bereich einander diametral entgegengesetzter Umfangsbereiche des Ventilgliedes 3 platziert. Mithin liegen sie sich bezüglich der Längsachse 10 diametral gegenüber. Ihre Arbeitsbewegungen 35 sind dabei zweckmäßigerweise parallel zueinander orientiert. Beide Arbeitsbewegungen 35 verlaufen zweckmäßigerweise in bezüglich der Längsachse 10 radialer Richtung.

Während die Stempel 33a, 33b exemplarisch einstückig ausgebildet sind, könnten sie prinzipiell auch mehrteilig strukturiert sein.

Jeder Stempel 33a, 33b ragt unabhängig von seiner bezüglich des Hüllkörpers 7 eingenommenen Radialposition ein Stückweit radial nach außen über die Außenumfangsfläche 17 hinaus. Mit anderen Worten hat jeder Stempel 33a, 33b einen bezüglich des Ventilgliedes 3 entgegengesetzt orientierten und außerhalb des Hüllkörpers 7 angeordneten äußeren Endabschnitt 37. Es ist bevorzugt dieser Endabschnitt 37, der einen zum Hervorrufen der Arbeitsbewegung 35 mit dem Betätigungsglied 18 kooperierenden Betätigungsabschnitt 38 bildet.

Das bevorzugt hülsenförmige Betätigungsglied 18 weist an seiner dem Ventilglied zugewandten radialen Innenseite 39 - die exemplarisch vom Innenumfang des Betätigungsgliedes 18 gebildet ist - eine der Anzahl der vorhandenen Stempel 33a, 33b entsprechende Anzahl von nichtlinearen Nuten 42a, 42b auf. Entsprechend der beim Ausführungsbeispiel vorhandenen Zweizahl von Stempeln 33a, 33b verfügt das Betätigungsglied 18 an seiner Innenseite 39 beziehungsweise an seinem Innenumfang über zwei Nuten 42a, 42b, die im Folgenden auch als erste Nut 42a und als zweite Nut 42b bezeichnet werden.

Die beiden Nuten 42a, 42b sind an der dem Ventilglied 3 zugewandten Innenseite offen. Sie haben vorzugsweise einen zumindest partiell und insbesondere über ihre gesamte Länge hinweg schraubenwendelförmigen Längsverlauf.

Zweckmäßigerweise sind die beiden Nuten 42a, 42b nach Art eines mehrgängigen Gewindes ausgebildet, wobei sie bezogen auf die axiale Richtung des Betätigungsgliedes 18 untereinander auf gleicher axialer Höhe liegen und lediglich in der Umfangsrichtung des Ventilgliedes 3 versetzt zueinander angeordnet sind. Besagter Umfangsversatz beträgt insbesondere 180°. Die vorhandenen Nuten 42a, 42b haben untereinander zweckmäßigerweise auch einen identischen Längsverlauf.

Jeder Stempel 33a, 33b ragt mit seinem Betätigungsabschnitt 38 in eine der beiden Nuten 42a, 42b von radial innen her hinein. Dementsprechend greifen die Stempel 33a, 33b in unterschiedliche Nuten 42a, 42b.

Die beiden Stempel 33a, 33b sind zweckmäßigerweise in Achsrichtung der Längsachse 10 auf gleicher Höhe angeordnet. Sie haben vorzugsweise auch eine lineare Längserstreckung quer zu der Längsachse 10. Somit greifen sie mit ihren die Betätigungsabschnitte 38 bildenden Endabschnitten 37 auf gleicher axialer Höhe des Betätigungsgliedes 18 in unterschiedliche Nuten 42a, 42b ein.

Jede Nut 42a, 42b ist von einer Begrenzungsfläche 45 begrenzt, die die Querschnittskontur der betreffenden Nut 42a, 42b definiert. Exemplarisch setzt sich die Begrenzungsfläche 45 pro Nut 42a, 42b aus einer der Nutöffnung gegenüberliegenden Grundfläche 43 und zwei sich in der Achsrichtung der Längsachse 10 gegenüberliegenden und einander zugewandten seitlichen Nutflanken 46 zusammen.

Beim Ausführungsbeispiel ist der Querschnitt der Nuten 42a, 42b in vorteilhafter Weise trapezförmig gestaltet, so dass sowohl die Grundfläche 43 als auch die beiden Nutflanken 46 eine geradlinige Querschnittskontur haben. Die Nutflanken 46 sind überdies zweckmäßigerweise so gestaltet, dass sie ausgehend von der Grundfläche 43 zur Nutöffnung hin divergieren. Jede Nut 42a, 42b verjüngt sich also in ihrer Tiefenrichtung.

Zweckmäßigerweise ist es die Grundfläche 43 einer jeweiligen Nut 42a, 42b, die eine Betätigungsfläche 44 bildet, die mit dem zugeordneten Betätigungsabschnitt 38 antriebsmäßig und hierzu drückend zusammenarbeitet. Jeder Stempel 33a, 33b stützt sich mit seinem Betätigungsabschnitt 38 von radial innen her an einer Grundfläche 43 und mithin an der von dieser gebildeten Betätigungsfläche 44 ab. Somit ist klar, dass die Arbeitsposition jedes Stempels 33a, 33b, das heißt die im Rahmen der Arbeitsbewegung 35 einnehmbare Position jedes Stempels 33a, 33b, davon abhängt, welcher radiale Abstand zwischen dem momentan mit dem Betätigungsabschnitt 38 kooperierenden Flächenabschnitt der Betätigungsfläche 44 und der Längsachse 10 vorliegt.

Dieser vorgenannte Umstand wird bei dem vorliegenden Quetschventil dahingehend berücksichtigt, dass jede Nut 42a, 42b über ihren Längsverlauf hinweg eine sich verändernde und insbesondere sich kontinuierlich verändernde Nuttiefe aufweist. Dies hat zur Folge, dass die von der Grundfläche 43 gebildete Betätigungsfläche 44 ebenfalls einen Längsverlauf mit sich bezüglich der Längsachse 10 und somit auch bezüglich des Ventilgliedes 3 veränderndem radialen Abstand hat.

Aufgrund des wendelförmigen Längsverlaufes der Nuten 42a, b kommt hinzu, dass auch die Betätigungsfläche 44 über einen wendelförmigen Längsverlauf verfügt, also über einen Längsverlauf, der sich zumindest ein Stückweit in der Umfangsrichtung des Ventilgliedes 3 erstreckt und zusätzlich eine dieser Umfangsrichtung überlagerte und in Achsrichtung der Längsachse 10 des Ventilgliedes 3 orientierte Axialkomponente aufweist.

Die weiter oben schon angesprochenen Führungsmittel 28a, 28b sorgen dafür, dass das Betätigungsglied 18 bei Einleitung eines Drehmoments die schon erwähnte Betätigungsbewegung 26 ausführt, wobei am Betätigungsabschnitt 38 jedes Stempels 33a, 33b eine der sich schraubenwendelförmig um das Ventilglied 3 herum erstreckenden Betätigungsflächen 45 abgleitet. Bedingt durch die miteinander kooperierenden Führungsmittel 28a, 28b schraubt sich das Betätigungsglied 18 dabei in Achsrichtung der Längsachse 10 relativ zum Ventilglied 3 vorwärts. Gleichzeitig werden die Stempel 33a, 33b allmählich und insbesondere kontinuierlich bei gleichzeitigem Zusammenquetschen des Ventilgliedes 3 nach innen verschoben, weil an ihren Betätigungsabschnitten 38 jeweils eine der Betätigungsflächen 44 abgleitet, deren bezüglich der Längsachse 10 eingenommener Radialabstand sich über ihren Längsverlauf hinweg ändert.

In vorteilhafter Weise sind die Führungsmittel 28a, 28b von einerseits dem Betätigungsabschnitt 38 und andererseits den Nutflanken 46 einer jeweiligen Nut 42a, 42b gebildet. Somit erfüllt jede Nut 42a, 42b wie auch jeder Betätigungsabschnitt 38 eine Doppelfunktion in Bezug auf einerseits Hervorrufen der die Arbeitsbewegung 35 verursachenden Stellkraft und andererseits Führung des Betätigungsgliedes 18 bei seinem Schraubvorgang. Das Eingreifen der Stempel 33a, 33b in die Nuten 42a, 42b ist mit einem Gewindeeingriff vergleichbar, wobei die Stempel 33a, b aufgrund ihrer in Achsrichtung der Längsachse 10 unveränderlichen Position dafür sorgen, dass die Betätigungsbewegung 32 des Betätigungsgliedes 18 aus der Überlagerung einer Drehbewegung 26 und einer axialen Verschiebebewegung 27 resultiert.

Damit einer eventuellen Verkantungsgefahr zwischen dem Betätigungsabschnitt 38 und dem Betätigungsglied 18 vorgebeugt wird, ist es vorteilhaft, wenn der Betätigungsabschnitt 38 in dem in eine Nut 42a, 42b eingreifenden Bereich eine sich verjüngende Außenkontur hat, wenn man den Stempel 33a, 33b in Achsrichtung der Längsachse 10 betrachtet. Gemäß Figuren 5 und 10 kann der Endabschnitt insbesondere abgerundet sein.

Wenn man die aus der mindestens einen Nut 42a, 42b resultierende Struktur des Betätigungsgliedes 18 betrachtet, bilden die Nuten 42a, 42b mit den axial jeweils dazwischen verbleibenden Vorsprüngen, die die zur Führung dienenden Nutflanken 46 definieren, jeweils zweckmäßigerweise ein konisches Gewinde.

Die axiale Steigung jeder wendelförmigen Nut 42a, 42b ist zweckmäßigerweise gleichmäßig. Dadurch lässt sich durch Einleiten eines Drehmoments in das Betätigungsglied 18 eine gleichmäßige Vorschraubbewegung und außerdem eine gleichmäßige Betätigung der Stempel 33a, 33b hervorrufen.

Es ist ferner vorteilhaft, wenn sich der Grad der in der Längsrichtung einer Betätigungsfläche 44 auftretenden Abstandsveränderung bezüglich der Längsachse 10 auf ein Maß beläuft, das in jeder Einstellposition des Betätigungsgliedes 18 eine Selbsthemmung hervorruft. Somit behalten die Stempel 33a, 33b jede eingestellte Arbeitsposition auch dann bei, wenn an dem Betätigungsglied 18 keine externe Betätigungskraft mehr anliegt.

Das Quetschventil der Figuren 1 bis 11 ist insbesondere zur manuellen Betätigung ausgebildet. Die manuelle Betätigung erfolgt durch manuelles Einleiten eines in der Umfangsrichtung der Längsachse 10 orientierten Drehmoments in das Betätigungsglied 18. Man kann das Betätigungsglied beispielsweise bequem mit einer Hand umfassen und auf diese Weise das gewünschte Betätigungs-Drehmoment einleiten.

Die jeweils vorgenommene Durchflusseinstellung lässt sich sehr einfach visualisieren, wenn an der Außenumfangsfläche 17 des Hüllkörpers 7 eine sich in der Längsrichtung des Ventilgliedes 3 erstreckende Anzeigeskala 47 angeordnet ist, die mit dem im Rahmen der Betätigungsbewegung 26 axial verstellbaren Betätigungsglied 18 zusammenwirkt. Je nach Einstellposition des Betätigungsgliedes 18 überdeckt selbiges die axiale Anzeigeskala 47 in einem mehr oder weniger großen axialen Ausmaß, was als Indikator für die momentan vorliegende Durchflusseinstellung herangezogen werden kann.

Beispielsweise kann eine axial orientierte Stirnfläche 52 hinsichtlich ihrer momentanen Axialposition als Bezugskante herangezogen werden, deren bezüglich der Anzeigeskala 47 eingenommene Relativposition den jeweiligen Betriebszustand wiedergibt.

Ein Vorteil des beispielhaften Quetschventils 1 besteht darin, dass der vom Ventilglied 3 zur Verfügung gestellte Strömungsquerschnitt stufenlos verändert und eingestellt werden kann. Der momentan eingestellte Öffnungswert lässt sich an der bezüglich des Hüllkörpers 7 eingenommenen Axialposition des Betätigungsgliedes 18 bequem ableiten. Es besteht ferner die vorteilhafte Möglichkeit, den Längsverlauf der Nuten 42a, 42b so zu wählen, dass der bei Ausübung der Betätigungsbewegung 26 überstrichene Drehwinkel des Betätigungsgliedes 18 und die damit verbundene Veränderung des durch das Ventilglied 3 definierten Strömungsquerschnittes einen linearen Zusammenhang bilden.

Um eine Verschmutzung des Kooperationsbereiches zwischen den Stempeln 33a, 33b und den Längsnuten 42a, 42b zu vermeiden, kann das Betätigungsglied 18 im Bereich seiner beiden Stirnseiten bezüglich der Außenumfangsfläche 17 abgedichtet sein. Beispielsweise kann das Betätigungsglied 18 an den entsprechenden Stellen einen Dichtungsring tragen, der gleitverschieblich an der Außenumfangsfläche 17 anliegt.

Zweckmäßigerweise mündet die mindestens eine Nut 42a, 42b zu mindestens einer axialen Stirnfläche 52 des Betätigungsgliedes 18 hin aus. Sind mehrere Nuten 42a, 42b vorhanden, münden zweckmäßigerweise sämtliche Nuten 42a, 42b zur gleichen axialen Stirnfläche 52 aus. Der axialen Stirnfläche 52 ist zweckmäßigerweise derjenige Endabschnitt einer jeweiligen Nut 42a, 42b zugeordnet, der die größte Nuttiefe hat. Somit lässt sich das Betätigungsglied 18 ausgehend von der in Figur 1 gezeigten demontierten Stellung sehr einfach dadurch auf dem Hüllkörper 7 platzieren und mit den Betätigungsabschnitten 38 in Eingriff binden, dass er mit besagter axialer Stirnfläche 52 voraus auf den Hüllkörper 7 aufgeschoben und durch anschließendes Verdrehen auf die Betätigungsabschnitte 38 aufgeschraubt wird. Die an der axialen Stirnfläche 52 offenen Endabschnitte der Nuten 42a, b sind bei 53 angedeutet.

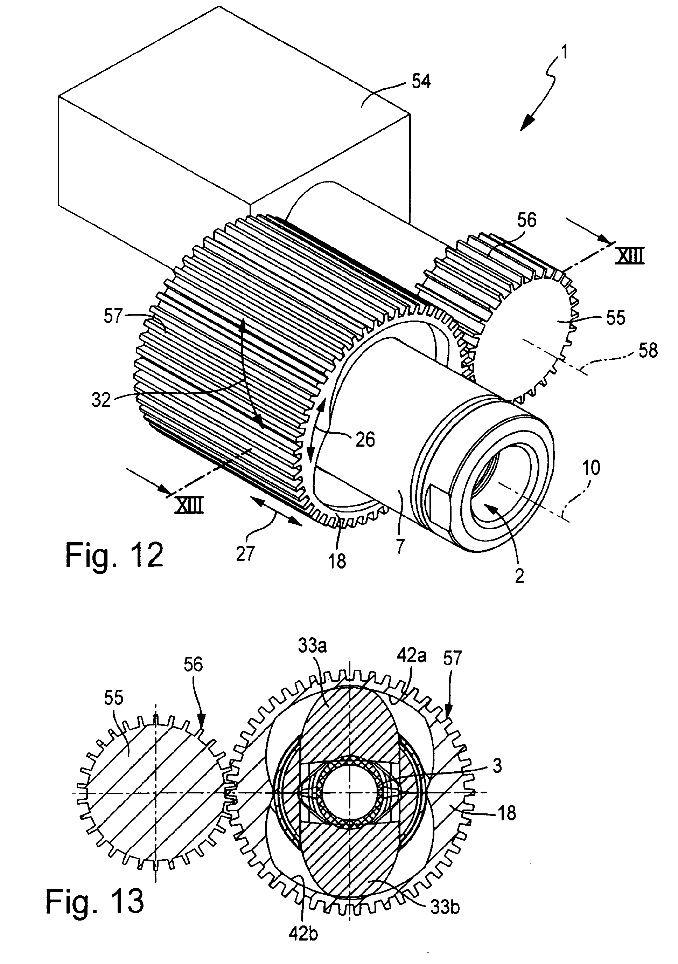

Das in Figuren 12 und 13 gezeigte Ausführungsbeispiel stimmt abgesehen von der Art und Weise der Einleitung des Betätigungs-Drehmomentes in das hülsenförmige Betätigungsglied 18 mit der Ausführungsform der Figuren 1 bis 11 überein. Die Unterschiede äußern sich insbesondere darin, dass das die Betätigungsbewegung 32 hervorrufende Drehmoment maschinell und insbesondere motorisch in das Betätigungsglied 18 eingeleitet wird.

Das Quetschventil 1 der Figuren 12 und 13 enthält einen elektrischen Antriebsmotor 54, dessen Abtriebswelle mit einem Antriebsritzel 55 verbunden ist, das über eine Außenverzahnung 56 verfügt, die mit einem Zahnkranz 57 kämmt, der um den dem Ventilglied 3 radial entgegengesetzten Außenumfang des Betätigungsgliedes 18 herum angeordnet ist.

Eine durch den Antriebsmotor 54 hervorgerufene Rotation des Antriebsritzels 55 bewirkt somit aufgrund des Verzahnungseingriffes eine Drehbewegung 26 des Betätigungsgliedes 18, der aufgrund der Kooperation zwischen den Führungsmitteln 28a, 28b eine Verschiebebewegung 27 überlagert wird, was insgesamt die Betätigungsbewegung 32 zur Folge hat. Die axiale Beweglichkeit des Betätigungsgliedes 18 kann problemlos dadurch gewährleistet werden, dass das Antriebsritzel 55 mit zur Längsachse 10 des Ventilgliedes 3 paralleler Ausrichtung seiner Längsachse 58 angeordnet wird und sowohl die Außenverzahnung 56 als auch der Zahnkranz 57 als Geradverzahnung ausgebildet sind, so dass das Betätigungsglied 18 bei Ausführung der Verschiebebewegung 27 an dem Antriebsritzel 55 abgleiten kann.

Die Betätigungskraft zum Hervorrufen der Betätigungsbewegung 32 kann auch auf andere maschinelle Weise erzeugt werden, beispielsweise durch eine elektromagnetische Antriebseinheit oder durch eine mittels Fluidkraft betätigbare Antriebseinrichtung.

Wenn ein nichtlineares Verstellverhalten der Stempel 33a, b gewünscht ist, kann die Betätigungsfläche 44 auch so ausgebildet sein, dass sich ihr Abstand zum Ventilglied entlang ihrer Längsrichtung nicht kontinuierlich ändert, sondern beispielsweise mit sich verändernder Steigung. Auch die bezüglich der Längsachse 10 axiale Steigung der wendelförmigen Betätigungsfläche 44 kann ungleichmäßig sein. Im Übrigen unterliegt die Gestaltung der Betätigungsfläche 44 keinen besonderen Einschränkungen, so dass insbesondere auch die Möglichkeit besteht, einen oder mehrere ihrer Längenabschnitte so auszurichten, dass sie ausschließlich in der Umfangsrichtung des Ventilgliedes 3 oder ausschließlich in der Längsrichtung des Ventilgliedes 3 verlaufen.

## Patentansprüche

1. Quetschventil, mit einem eine Längsachse (10) aufweisenden schlauchförmigen Ventilglied (3) und einem im Bereich des Außenumfanges des Ventilgliedes (3) angeordneten und unter Ausführung einer Betätigungsbewegung (32) relativ zu dem Ventilglied (3) in dessen Umfangsrichtung verdrehbaren Betätigungsglied (18), und ferner mit mindestens einem zwischen dem Ventilglied (3) und dem Betätigungsglied (18) angeordneten, zum Zwecke eines mehr oder weniger starken Zusammenquetschens des Ventilgliedes (3) quer zu dessen Längsachse (10) unter Ausführung einer Arbeitsbewegung (35) wahlweise nach innen in Richtung zum Ventilglied (3) oder entgegengesetzt dazu nach außen bewegbaren Stempel (33a, 33b), wobei das Betätigungsglied (18) an seiner dem Ventilglied (3) zugewandten Innenseite (39) mindestens eine zur nach innen gerichteten drückenden Beaufschlagung des mindestens einen Stempels (33a, 33b) dienende und bei Ausführung der Betätigungsbewegung (32) an dem mindestens einen Stempel (33a, 33b) abgleitende Betätigungsfläche (44) aufweist, die einen sich mit bezüglich des Ventilgliedes (3) veränderndem Abstand zumindest ein Stückweit in der Umfangsrichtung des Ventilgliedes (3) erstreckenden Längsverlauf hat, der zumindest partiell eine der Umfangsrichtung des Ventilgliedes (3) überlagerte, in Achsrichtung der Längsachse (10) des Ventilgliedes (3) orientierte Axialkomponente aufweist, wobei die Betätigungsbewegung (32) des Betätigungsgliedes (18) eine durch Führungsmittel (28a, 28b) vorgegebene Kombination einer Drehbewegung (26) und einer diesbezüglich zumindest phasenweise überlagerten axialen Verschiebebewegung (27) ist, **dadurch gekennzeichnet, dass** an der Innenseite (39) des Betätigungsgliedes (18) mehrere nach Art eines mehrgängigen Gewindes ausgebildete nichtlineare Nuten (42a, 42b) angeordnet sind, in die jeweils einer von mehreren entlang des Außenumfanges des Ventilgliedes (3) verteilt angeordneten Stempeln (33a, 33b) eingreift und die jeweils eine Betätigungsfläche (44) und zugleich ein Führungsmittel (28b) bilden.

2. Quetschventil nach Anspruch 1, **dadurch gekennzeichnet, dass** jede Betätigungsfläche (44) von der Begrenzungsfläche (45) und hierbei insbesondere von der Grundfläche (43) einer der an der Innenseite (39) des Betätigungsgliedes (18) angeordneten Nuten (42a, 42b) gebildet ist, in die der mindestens eine Stempel (33a, 33b) mit einem dem Ventilglied (3) entgegengesetzten Betätigungsabschnitt (38) hineinragt, wobei der Betätigungsabschnitt (38) insbesondere von einem sich verjüngenden Endabschnitt (37) des Stempels (33a, 33b) gebildet ist.

3. Quetschventil nach Anspruch 1 oder 2, **dadurch gekennzeichnet, dass** die Nuten (42a, 42b) eine sich in der Nutlängsrichtung verändernde Tiefe aufweisen, wobei zweckmäßigerweise eine kontinuierliche Tiefenänderung vorliegt.

4. Quetschventil nach einem der Ansprüche 1 bis 3, **dadurch gekennzeichnet, dass** mindestens ein Führungsmittel (28b) von der Begrenzungsfläche (45) mindestens einer der Nuten (42a, 42b) und insbesondere von sich mit Abstand gegenüberliegenden Nutflanken (46), zwischen die der Stempel (33a, 33b) eintaucht, gebildet ist.

5. Quetschventil nach einem der Ansprüche 1 bis 4, **dadurch gekennzeichnet, dass** mindestens ein Führungsmittel (28a) von mindestens einem Stempel (33a, 33b) gebildet ist.

6. Quetschventil nach einem der Ansprüche 1 bis 5, **dadurch gekennzeichnet, dass** die Betätigungsflächen (44) zumindest partiell einen schraubenwendelförmigen Längsverlauf haben.

7. Quetschventil nach einem der Ansprüche 1 bis 6, **dadurch gekennzeichnet, dass** im Bereich des Außenumfanges des Ventilgliedes (3) zwei Stempel (33a, 33b) sich diametral gegenüberliegend angeordnet sind, deren Arbeitsbewegungen (35) zweckmäßigerweise radial bezüglich der Längsachse (10) des Ventilgliedes (3) orientiert sind.

8. Quetschventil nach einem der Ansprüche 1 bis 7, **dadurch gekennzeichnet, dass** die mehreren Betätigungsflächen (44) in der Umfangsrichtung des Ventilgliedes (3) versetzt zueinander an dem Betätigungsglied (18) angeordnet sind, wobei der Ver- satz insbesondere 180° beträgt.

9. Quetschventil nach einem der Ansprüche 1 bis 8, **dadurch gekennzeichnet, dass** die mehreren Betätigungsflächen (44) ei- nen untereinander identischen Längsverlauf haben.

10. Quetschventil nach einem der Ansprüche 1 bis 9, **dadurch gekennzeichnet, dass** das Betätigungsglied (18) hülsenförmig ausgebildet und koaxial zu dem ventilglied (39) angeordnet ist.

11. Quetschventil nach einem der Ansprüche 1 bis 10, **dadurch gekennzeichnet, dass** es einen das Ventilglied (3) koaxial umschließenden starren Hüllkörper (7) aufweist, an dessen Außenumfangsfläche (17) das Betätigungsglied (18) verdrehbar und axial verschiebbar angeordnet ist und dessen Wandung von dem mindestens einen Stempel (33a, 33b) verschiebbar durchsetzt ist.

12. Quetschventil nach Anspruch 11, **dadurch gekennzeichnet, dass** an der Außenumfangsfläche (17) des Hüllkörpers (7) eine sich in der Längsrichtung des Ventilgliedes (3) erstreckende Anzeigeskala (47) angeordnet ist, die von dem Betätigungsglied (18) in Abhängigkeit von seiner Einstellposition unterschiedlich weit axial überfahren wird.

13. Quetschventil nach einem der Ansprüche 1 bis 12, **dadurch gekennzeichnet, dass** sich der Grad der in der Längsrichtung der Betätigungsfläche (44) vorliegenden Abstandsveränderung zwischen der Betätigungsfläche (44) und dem Ventilglied (3) auf ein Maß beläuft, das eine Selbsthemmung des Betätigungsgliedes (18) in jeder Einstellposition hervorruft.

14. Quetschventil nach einem der Ansprüche 1 bis 13, **dadurch gekennzeichnet, dass** das Betätigungsglied (18) zur manuellen und/oder zur maschinellen Einleitung einer die Betätigungsbewegung (32) hervorrufenden Betätigungskraft ausgebildet ist, wobei das Quetschventil (1) zur maschinellen Einleitung der Betätigungskraft zweckmäßigerweise einen mit dem Betätigungsglied (18) antriebsmäßig gekoppelten elektrischen Antriebsmotor (54) enthält.

## Claims

1. Pinch valve, with a hose-like valve member (3) with a longitudinal axis (10), and an actuating member (18) located in the area of the outer periphery of the valve member (3) and rotatable while executing an actuating movement (32) relative to the valve member (3) in its circumferential direction, and also with at least one punch (33a, 33b) located between the valve member (3) and the actuating member (18) and movable either inwards towards the valve member (3) or outwards in the opposite direction for the purpose of pinching together the valve member (3) with more or less strength transversely to its longitudinal axis (10), while executing an operating movement (35), wherein the actuating member (18) has on its inner side (39) facing the valve member (3) at least one actuating surface (44), for pressure-loading of the punch or punches (33a, 33b) and sliding off the punch or punches (33a, 33b) during execution of the actuating movement (32), and with a longitudinal course extending with varying distance from the valve member (3) at least a short distance in the circumferential direction of the valve member (3) and with an axial component at least partly superimposing in the circumferential direction of the valve member (3) and oriented in the axial direction of the longitudinal axis (10) of the valve member (3), wherein the actuating movement (32) of the actuating member (18) is a combination preset by guide means (28a, 28b) of a rotary movement (26) and an axial shifting movement (27) superimposed on the former at least in phases, **characterised in that** there are provided on the inner side (39) of the actuating member (18) several non-linear slots (42a, 42b) in the form of a multiple start thread, in each of which there engages one of several punches (33a, 33b) distributed along the outer periphery of the valve member (3), each forming an actuating surface (44) and at the same time a guide means (28b).

2. Pinch valve according to claim 1, **characterised in that** each actuating surface (44) is formed by the boundary surface (45) and here in particular by the base (43) of one of the slots (42a, 42b) provided on the inner side (39) of the actuating member (18), into which the punch or punches (33a, 33b) extends or extend with a actuating section (38) opposite the valve member (3), wherein the actuating section (38) is formed in particular by a tapering end section (37) of the punch (33a, 33b).

3. Pinch valve according to claim 1 or 2, **characterised in that** the slots (42a, 42b) have a depth which varies in the axial direction of the slot, expediently with a continuous change in depth.

4. Pinch valve according to any of claims 1 to 3, **characterised in that** at least one guide means (28b) is formed by the boundary surface (45) of at least one of the slots (42a, 42b) and in particular by slot sides (46) lying opposite one another with clearance, between which the punch (33a, 33b) dips.

5. Pinch valve according to any of claims 1 to 4, **characterised in that** at least one guide means (28a) is formed by at least one punch (33a, 33b).

6. Pinch valve according to any of claims 1 to 5, **characterised in that** the actuating surfaces (44) have at least in part a screw-spiral-like longitudinal course.

7. Pinch valve according to any of claims 1 to 6 **characterised in that**, in the area of the outer periphery of the valve member (3), two punches (33a, 33b) are arranged diametrically opposite one another and have operating movements (35) oriented expediently radially relative to the longitudinal axis (10) of the valve member (3).

8. Pinch valve according to any of claims 1 to 7, **characterised in that** the several actuating surfaces (44) in the circumferential direction of the valve member (3) are arranged offset to one another on the actuating member (18), wherein the offset is in particular 180°.

9. Pinch valve according to any of claims 1 to 8, **characterised in that** the several actuating surfaces (44) have an identical longitudinal course to one another.

10. Pinch valve according to any of claims 1 to 9, **characterised in that** the actuating member (18) is sleeve-shaped and mounted coaxial to the valve member (3).

11. Pinch valve according to any of claims 1 to 10 **characterised in that** it has, coaxially encompassing the valve member (3), an enveloping body (7) on the outer peripheral surface (17) of which the actuating member (18) is mounted with the ability to rotate and to shift axially, and with a wall through which the punch or punches (33a, 33b) can pass.

12. Pinch valve according to claim 11, **characterised in that** there is provided on the outer peripheral surface (17) of the enveloping body (7) an indicator scale (47) extending in the longitudinal direction of the valve member (3) and over which the actuating member (18) travels for a distance which varies with its set position.

13. Pinch valve according to any of claims 1 to 12, **characterised in that** the degree of the variation in distance in the longitudinal direction of the actuating surface (44) between the actuating surface (44) and the valve member (3) is of an amount which generates self-retention of the actuating member (18) in each set position.

14. Pinch valve according to any of claims 1 to 13, **characterised in that** the actuating member (18) is designed for manual and/or mechanical initiation of an actuating force generating the actuating movement (32), wherein the pinch valve (1) expediently contains for mechanical initiation of the actuating force an electrical drive motor (54) connected for driving purposes to the actuating member (18).

## Revendications

1. Vanne de compression, comprenant un organe de vanne (3) de forme tubulaire présentant un axe longitudinal (10) et un organe d'actionnement (18) disposé dans la zone de la périphérie extérieure de l'organe de vanne (3) et pouvant être tourné par rapport à l'organe de vanne (3), dans la direction périphérique de ce dernier, en exécutant un mouvement d'actionnement (32), et comprenant en outre au moins un poinçon (33a, 33b), disposé entre l'organe de vanne (3) et l'organe d'actionnement (18), pouvant être déplacé, aux fins d'une compression plus ou moins forte de l'organe de vanne (3), de manière transversale par rapport à l'axe longitudinal (10) de ce dernier, en exécutant un mouvement de travail (35), au choix vers l'intérieur dans la direction de l'organe de vanne (3) ou à l'opposé vers l'extérieur, sachant que l'organe d'actionnement (18) présente, au niveau de son côté intérieur (39) tourné vers l'organe de vanne (3), au moins une face d'actionnement (44) servant à soumettre au moins un poinçon (33a, 33b) à l'action d'une pression orientée vers l'intérieur et coulissant au niveau du poinçon (33a, 33b) au moins au nombre de un en exécutant le mouvement d'actionnement (32), laquelle face d'actionnement présente un tracé longitudinal s'étendant au moins de manière un peu éloignée, à une distance variable par rapport à l'organe de vanne (3), dans la direction périphérique de l'organe de vanne (3), lequel tracé longitudinal présente au moins en partie une composante axiale superposée à la direction périphérique de l'organe de vanne (3), orientée dans la direction axiale de l'axe longitudinal (10) de l'organe de vanne (3), sachant que le déplacement d'actionnement (32) de l'organe d'actionnement (18) est une combinaison prédéfinie par des moyens de guidage (28a, 28b) d'un déplacement par rotation (26) et d'un déplacement par coulissement (27) axial superposé par rapport à ce dernier au moins par phases, **caractérisée en ce que** sont disposées, au niveau du côté intérieur (39) de l'organe d'actionnement (18), plusieurs rainures (42a, 42b) non linéaires réalisées à la manière d'un filetage à plusieurs pas, avec lesquelles respectivement un poinçon parmi plusieurs poinçons (33a, 33b) disposés de manière répartie le long de la périphérie extérieure de l'organe de vanne (3) vient en prise et qui constituent respectivement une face d'actionnement (44) et par la même un moyen de guidage (28b).

2. Vanne de compression selon la revendication 1, **caractérisée en ce que** chaque face d'actionnement (44) est formée par la face de délimitation (45) et, en particulier, par la face de base (43) d'une des rainures (42a, 42b) disposées au niveau du côté intérieur (39) de l'organe d'actionnement (18), dans lesquelles au moins un poinçon (33a, 33b) dépasse par une section d'actionnement (38) opposée à l'organe de vanne (3), sachant que la section d'actionnement (38) est formée en particulier par une section d'extrémité (37) se rétrécissant du poinçon (33a, 33b).

3. Vanne de compression selon la revendication 1 ou 2, **caractérisée en ce que** les rainures (42a, 42b) présentent une profondeur variant dans la direction longitudinale de rainure, sachant qu'une variation continue de la profondeur est mise de manière appropriée.

4. Vanne de compression selon l'une quelconque des revendications 1 à 3, **caractérisée en ce qu'**au moins un moyen de guidage (28b) est formé par la face de délimitation (45) d'au moins une des rainures (42a, 42b), et en particulier par des flancs de rainure (46) se faisant face de manière espacée, entre lesquelles le poinçon (33a, 33b) s'enfonce.

5. Vanne de compression selon l'une quelconque des revendications 1 à 4, **caractérisée en ce qu'**au moins un moyen de guidage (28a) est formé par au moins un poinçon (33a, 33b).

6. Vanne de compression selon l'une quelconque des revendications 1 à 5, **caractérisée en ce que** les faces d'actionnement (44) présentent au moins en partie un tracé longitudinal présentant une forme de spirale.

7. Vanne de compression selon l'une quelconque des revendications 1 à 6, **caractérisée en ce que** deux poinçons (33a, 33b) sont disposés dans la zone de la périphérie extérieure de l'organe de vanne (3) de manière à se faire face diamétralement, les mouvements de travail (35) des poinçons sont orientés de manière appropriée radialement par rapport à l'axe longitudinal (10) de l'organe de vanne (3).

8. Vanne de compression selon l'une quelconque des revendications 1 à 7, **caractérisée en ce que** les nombreuses faces d'actionnement (44) sont disposées dans la direction périphérique de l'organe de vanne (3), de manière décalée les unes par rapport aux autres, au niveau de l'organe d'actionnement (18), sachant que le décalage est en particulier de 180°.

9. Vanne de compression selon l'une quelconque des revendications 1 à 8, **caractérisée en ce que** les nombreuses faces d'actionnement (44) présentent un tracé longitudinal identique.

10. Vanne de compression selon l'une quelconque des revendications 1 à 9, **caractérisée en ce que** l'organe d'actionnement (18) est réalisé de manière à présenter une forme de douille et est disposé de manière coaxiale par rapport à l'organe de vanne (39).

11. Vanne de compression selon l'une quelconque des revendications 1 à 10, **caractérisée en ce qu'**elle présente un corps enveloppant (7) rigide entourant de manière coaxiale l'organe de vanne (3), au niveau de la surface périphérique extérieure (17), l'organe d'actionnement (18) étant disposé de manière à pouvoir tourner et de manière à pouvoir se déplacer axialement par coulissement et dont la paroi est traversée de manière à pouvoir se déplacer par coulissement par au moins un poinçon (33a, 33b).

12. Vanne de compression selon la revendication 11, **caractérisée en ce qu'**une gradation indicatrice (47) s'étendant dans la direction longitudinale de l'organe de vanne (3) est disposée au niveau de la surface périphérique extérieure (17) du corps enveloppant (7), la gradation étant parcourue axialement sur des distances différentes par l'organe d'actionnement (18) en fonction de sa position de réglage.

13. Vanne de compression selon l'une quelconque des revendications 1 à 12, **caractérisée en ce que** le degré de la variation de distance de mise dans la direction longitudinale de la face d'actionnement (44) entre la face d'actionnement (44) et l'organe de vanne (3) présente une mesure, qui entraîne un blocage automatique de l'organe d'actionnement (18) dans chaque position de réglage.

14. Vanne de compression selon l'une quelconque des revendications 1 à 13, **caractérisée en ce que** l'organe d'actionnement (18) est réalisé pour provoquer manuellement et/ou mécaniquement une force d'actionnement entraînant le mouvement d'actionnement (32), sachant que la vanne de compression (1) servant à provoquer mécaniquement la force d'actionnement comporte de manière appropriée un moteur d'entraînement (54) électrique couplé en entraînement à l'organe d'actionnement (18).
